(19) 

**Europäisches Patentamt**

**European Patent Office**

**Office européen des brevets**

(11) **EP 3 916 676 B1**

(12) **EUROPEAN PATENT SPECIFICATION**

(45) Date of publication and mention
of the grant of the patent:
**19.04.2023 Bulletin 2023/16**

(21) Application number: **20315290.5**

(22) Date of filing: **29.05.2020**

(51) International Patent Classification (IPC):
**G06T 7/20** (2017.01)

(52) Cooperative Patent Classification (CPC):
**G06N 3/08; G06F 18/24133; G06N 3/044;
G06N 3/045; G06T 7/20; G06V 20/56;** G06N 3/063;
G06T 2207/20081; G06T 2207/20084;
G06T 2207/30252

(54) **COMPUTER-IMPLEMENTED METHOD FOR PREDICTING MULTIPLE FUTURE TRAJECTORIES
OF MOVING OBJECTS**

COMPUTERIMPLEMENTIERTES VERFAHREN ZUR VORHERSAGE VON MEHREREN
ZUKÜNFTIGEN TRAJEKTORIEN VON BEWEGTEN OBJEKTEN

PROCÉDÉ MIS EN OEUVRE PAR ORDINATEUR PERMETTANT DE PRÉDIRE DE FUTURES
TRAJECTOIRES MULTIPLES D'OBJETS EN MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.12.2021 Bulletin 2021/48**

(73) Proprietor: **IMRA Europe SAS
06560 Valbonne (FR)**

(72) Inventors:
• **Becattini, Federico
50134 Firenze (FI) (IT)**
• **Marchetti, Francesco
52028 Terranuova Bracciolini (AR) (IT)**
• **Seidenari, Lorenzo
50134 Firenze (FI) (IT)**
• **DEL Bimbo, Alberto
50012 Bagno A Ripoli (FI) (IT)**
• **Abad, Frédéric
06220 Vallauris (FR)**
• **Buchicchio, Kévin
06220 Vallauris (FR)**
• **Bendahan, Rémy
06160 Juan LES Pins (FR)**

(74) Representative: **Vigand, Philippe et al
Novagraaf International SA
Chemin de l'Echo 3
1213 Onex - Genève (CH)**

(56) References cited:
• **NAMHOON LEE ET AL: "DESIRE: Distant Future
Prediction in Dynamic Scenes with Interacting
Agents", ARXIV.ORG, CORNELL UNIVERSITY
LIBRARY, 201 OLIN LIBRARY CORNELL
UNIVERSITY ITHACA, NY 14853, 14 April 2017
(2017-04-14), XP080763013, DOI:
10.1109/CVPR.2017.233**
• **YUNING CHAI ET AL: "MultiPath: Multiple
Probabilistic Anchor Trajectory Hypotheses for
Behavior Prediction", ARXIV.ORG, CORNELL
UNIVERSITY LIBRARY, 201 OLIN LIBRARY
CORNELL UNIVERSITY ITHACA, NY 14853, 12
October 2019 (2019-10-12), XP081514439,**
• **FERNANDO THARINDU ET AL: "Memory
Augmented Deep Generative Models for
Forecasting the Next Shot Location in Tennis",
IEEE TRANSACTIONS ON KNOWLEDGE AND
DATA ENGINEERING, IEEE SERVICE CENTRE ,
LOS ALAMITOS , CA, US, vol. 32, no. 9, 13 April
2019 (2019-04-13) , pages 1785-1797,
XP011803096, ISSN: 1041-4347, DOI:
10.1109/TKDE.2019.2911507 [retrieved on
2020-08-05]**
• **Shiv Shankar ET AL: "Labeled Memory Networks
for Online Model Adaptation", , 5 July 2017
(2017-07-05), XP055756407, Retrieved from the
Internet:
URL:https://arxiv.org/pdf/1707.01461.pdf
[retrieved on 2020-12-03]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 3 916 676 B1

**Description**

FIELD OF THE INVENTION

The present invention relates to a computer-implemented method for predicting multiple future trajectories of moving objects of interest in a driving environment of an autonomous vehicle (AV) or a vehicle equipped with an advanced driver assistance system (ADAS).

Such methods are useful especially in the field of assisting human drivers, advanced driver assistance systems or autonomous vehicles using cameras, radar, sensors, and other similar devices to perceive and interpret its surroundings.

BACKGROUND OF THE INVENTION

Autonomous vehicles are expected to drive in complex scenarios with several independent non cooperating agents. Path planning for safely navigating in such environments can not just rely on perceiving present location and motion of other agents. It requires instead to predict such variables in a far enough future.

In recent years a lot of effort has been made to imitate human skill and to develop autonomous vehicles that are able to safely drive among other agents, either autonomous or driven by humans. Whereas remarkable progress has been made for automotive, current approaches still lack the ability to explicitly remember specific instances from experience when trying to infer possible future states of surrounding agents. This is particularly important for predicting future locations of moving agents, so to take appropriate decisions and avoid collisions or potentially dangerous situations. Predicting future trajectories of such agents is intrinsically multimodal.

Multi-modal future means the complete solution of the problem of future prediction i.e. the set of all possible futures does not consist of a unique future but a plurality of futures whose most representative instances are called "future modes". Interpreted in a probabilistic framework, this is equivalent to say that the future can be modelled by a multi-modal probability distribution (covering the probabilities of occurrence of each individual future) with multiple peaks corresponding to the most probable futures.

Such task has proven to be extremely hard for machines. Common machine learning models, such as Recurrent Neural Networks, fail to address it. They are capable to store past information into an internal state, updated at every time step, and make predictions based on long term patterns. But in such networks, memory is a single hidden representation and is only addressable as a whole. State to state transition is unstructured and global thus making memory inspection and focused prediction difficult.

In the publication entitled "Key-Value Memory Networks for Directly Reading Documents" (https://arxiv.org/abs/1606.03126), the presented work tackles the task of Question Answering by directly reading documents instead of using Knowledge Bases. It achieves its goal by proposing a Key-Value Memory Network, which first stores facts in a key-value structured memory before reasoning on them in order to predict the answer. Such a system is a way to perform data memorization but this memorization remains episodic (the memory must be erased for each new document and questions), which makes the system unsuitable for online improvement. Moreover, because this system only needs to store one document at a time and memory size is not an issue for its implementation, there is no specific writing procedure able to optimize the stored information. And finally, such a system is designed for Question Answering and cannot be directly used for other purposes such as future trajectory prediction.

In the publication entitled "DESIRE: Distant Future Prediction in Dynamic Scenes with Interacting Agents (https://arxiv.ora/abs/1704.04394), the presented work uses a Variational Autoencoder for estimating a distribution from which future trajectories can be sampled. A large number of predictions is needed to cover all the search space and an additional procedure of Inverse Optimal Control is necessary to extract a final ranked subset of multiple trajectories. This is a complex system with an architecture made of many modules needing to be trained with a complex training procedure. This double complexity can make it difficult to deploy. Additionally, it is not adapted to online improvement as it needs to be fully retrained offline in case of new data arrival.

In the publication US2020082248, the disclosure is making use of a bidirectional long short-term memory (LSTM) network to predict future trajectories of moving objects. There are several problems with LSTMs. They encode in a single hidden state vector all the temporal information, which make difficult to address individual elements of knowledge, they also have limited ability to store very long term dependencies, and they need to be retrained offline to accommodate new data, hence being not suitable for online improvement. Moreover, such LSTM networks usually provide a unique average future which does not respect the intrinsic multi-modality of future prediction (multiple futures can emerge from a given unique past).

In the publication entitled "Forecasting Future Action Sequences with Neural Memory Networks (https://arxiv.org/abs/1909.09278), the presented work aims at predicting the future sequence of actions (as action labels, or classes) given an observed frame sequence and the corresponding observed action label sequence. This approach is efficient for predicting the label of the future actions, but it is not adapted to predict the future trajectories of the moving actors: it is adapted to provide outputs in the discrete label space but not in the continuous trajectory space.

In the publication entitled "Memory-Augmented Neural Networks for Predictive Process Analytics" (https://arxiv.org/abs/1802.00938), the presented work aims at handling event logs generated by the execution of business processes. An event log is a temporal sequence of events, an 'event' being characterized by such features as type of activity, allocated resource and associated time-stamp. From past event logs associated to a process, the system can predict future properties of the process such as the remaining time until process completion or the resources needed for completion. However, such a system cannot be easily adapted to handle data different from process event logs and consequently it cannot be used to predict the future trajectories of moving objects.

In the publication entitled "INFER: INtermediate representations for FuturE pRediction" (https://arxiv.org/abs/1903.10641), the presented work exploits a fully convolutional model that takes into account intermediate semantic representations and generates multimodal heatmaps of possible future locations, then looking for peaks of the distribution. This system can predict multiple future trajectories but with a precision limited by the dimensions of the cell of the grid underlying the computed heatmaps. Moreover, this system is not adapted to online refinement as the addition of new data requires an offline re-training of the full system.

Further relevant prior art is given by YUNING CHAI ET AL: "MultiPath: Multiple Probabilistic Anchor Trajectory Hypotheses for Behavior Prediction", ARXIV.ORG, 12 October 2019, and FERNANDO THARINDU ET AL: "Memory Augmented Deep Generative Models for Forecasting the Next Shot Location in Tennis", IEEE TRANSACTIONS ON KNOWLEDGE AND DATA ENGINEERING, vol. 32, no. 9, 13 April 2019, pages 1785-1797.

SUMMARY OF THE INVENTION

The present invention aims to address the above-mentioned drawbacks of the different prior arts, and more particularly to propose a reliable method for multimodal trajectory prediction.

A first aspect of the invention relates to a computer-implemented method for predicting multiple future trajectories of moving objects of interest in an environment of a monitoring device comprising a memory augmented neural network (MANN) comprising at least one trained encoder deep neural network, one trained decoder deep neural network and a key-value database storing keys corresponding to past trajectory encodings and associated values corresponding to associated future trajectory encodings, the method comprising an inference/prediction mode of the MANN with the steps of:

observing an input trajectory for each moving object of interest in the environment of the monitoring device; encoding the input trajectory; using the input trajectory encoding as a key element for the key-value database; retrieving a plurality K of key elements of stored past trajectory encodings corresponding to the K closest samples of the input trajectory encoding; addressing their K associated value elements corresponding to the K associated future trajectory encodings; decoding each of the addressed K associated future trajectory encodings jointly with the input trajectory encoding into K predicted future trajectories; and outputting the K predicted future trajectories of each moving object of interest for further processing by the monitoring device.

Such method proposes a novel architecture for multiple trajectory prediction based on Memory Augmented Neural Networks. This method learns past and future trajectory encodings using recurrent neural networks and exploits an associative external memory (i.e. key-value database) to store and retrieve such encodings. Such associative memory is particularly well suited with the task of trajectory prediction because the data is already organized into pairs of past and future sub-trajectories. Moreover, these are not unordered pairs since one component (the future) is a direct consequence of the other (the past). This advantageously fits into a key-value representation. The task of trajectory prediction, by definition, has to be performed observing up to a given time step and predicting an unseen future. The usage of an associative memory allows the model to relax this assumption, since it can make the unseen future observable or at least it can provide an estimate of what will likely be observed given the current past. This makes the trajectory prediction problem easier to be solved since the prediction part is now conditioned on information about the future. In a sense, the memory acts as an oracle telling to the model what will happen in the future and the model just needs to generate a plausible trajectory that reflects this. Trajectory prediction is then performed by decoding in-memory future encodings conditioned with the observed past. In this manner, if we get from the memory K multiple memorized past encodings close to the observed past encoding, and provide their associated future encodings along with the observed past encoding to our decoding system, then we have a way to predict K multiple futures corresponding to the same observed past, hence a multimodal future prediction. Our usage of MANN leverages the disjoint representation to create multiple outputs from a single input, leading to a fully multimodal predictive capability of the overall system. Further exploiting an encoder-decoder pipeline augmented with an associative memory, is easier to inspect and provides naturally multimodal predictions, obtaining state-of-the-art results on traffic datasets. Another advantage of using an associative memory for generating future predictions is that the model is also capable of remembering rare events. Although the most likely outcomes must be taken into account, unexpected events are what lead to the most dangerous situations.

According to an advantageous embodiment, the observed input trajectory is pre-processed before encoding to normalize it in translation and rotation and wherein stored past and future trajectory encodings are pre-processed in the same way to the input trajectory before encoding and storing.

By doing so it achieves translation and rotation invariance, which is important because it yields to much more compact memories while lowering the error significantly.

According to an advantageous embodiment, the environment of the monitoring device is a driving environment and the monitoring device is an autonomous vehicle (AV) or a vehicle equipped with an advanced driver assistance system (ADAS).

Using this approach in the field of AV or vehicle equipped with ADAS is particularly appropriate as it offers dynamic predictions not only based on the training of the networks but also on the stored key and value data in the database.

According to an advantageous embodiment, the MANN comprises two trained encoder deep neural networks, the method comprising a training mode prior to the inference mode with the steps of: cutting a dataset of trajectories into pairs of past and future trajectories; preprocessing the past and future trajectories to normalize them in translation and rotation by shifting the present time set (t) in the origin (0,0) of a reference system (X,Y) and rotating each trajectory in order to make it tangent with the Y-axis in the origin; training one encoder deep neural network to map preprocessed past trajectories into past trajectory encodings, and training another encoder deep neural network to map preprocessed future trajectories into future trajectory encodings; and training a decoder deep neural network applied to past and future trajectory encodings to reproduce the future trajectories conditioned by the past trajectory encodings.

The motivation behind using two different encoders is to be found in how the data is preprocessed. In a reference system (X,Y) where the present coordinate is centered in (0,0) and the Y-axis follows the heading of the vehicle in the present, the past trajectories will always approach (0,0) from below in the half-plane with negative Y coordinates. Similarly, future trajectories will all spawn from (0,0) in an upward direction. By doing so it achieves translation and rotation invariance, which is important because it yields to much more compact memories while lowering the error significantly. Further, the distributions of past and future data are therefore very different and better dealt with two separate encoders so as to let the model learn representations that are the most suitable for the task.

According to an advantageous embodiment, during the training mode, the two encoder deep neural networks and the decoder deep neural network are trained jointly as an autoencoder deep neural network.

Encoders and decoder are jointly trained, but differently from standard autoencoders, only part of the input is reconstructed, i.e. the future. The past has the important role of conditioning the reconstruction so that we can generalize to unseen examples.

According to an advantageous embodiment, the MANN further comprises a trained memory controller neural network, the method further comprising during the training mode, the step of training the memory controller neural network to perform writing operations in the key-value database by learning to emit write probabilities depending on the reconstruction errors by means of a training controller loss depending on a time-adaptive miss error rate function.

Such method allows the memory growth to be limited by training the memory controller based on the predictive capability of existing encodings. The proposed model writes (i.e. stores) in memory only useful and non-redundant training samples based on the predictive capability of the stored past and future encodings to perform accurate predictions.

According to an advantageous embodiment, the method further comprises during the training mode, a step of storing, in the key-value database, past trajectory encodings as key elements and future trajectory encodings as value elements.

When a rare event is observed at training time, this will be added to memory since the model will not be able to predict it well enough. The model will then retain in memory these rare events that can be successively read at test time. This is especially true in a multimodal prediction setting in which predictions should not just minimize some error with respect to a single trajectory but offer coverage of multiple possible paths any moving object may take.

According to an advantageous embodiment, the method further comprises during the training mode, a step of fine-tuning the decoder deep neural network with past trajectory encodings belonging to training samples and future trajectory encodings coming from values stored in the key-value database.

According to an advantageous embodiment, the method comprises a memorization mode performed after the training mode and before the inference mode with the step of storing in the key-value database, past trajectory encodings as key elements and future trajectory encodings as value elements.

To memorize samples, past and future trajectories are stored in the memory (i.e. key-value database) in an encoded form, separately. In fact, this allows to use the encoding of an observed trajectory as a memory key to read an encoded future and decode them jointly to generate a prediction. Therefore, the actual future trajectory coordinates are obtained by decoding a future read from memory, conditioning the decoding with the observed past. In this way, the output is not a simple copy of previously seen examples, but is instead a newly generated trajectory obtained both from the system experience (i.e. its memory) and the instance observed so far. By reading multiple futures from memory, diverse meaningful predictions can be obtained.

According to an advantageous embodiment, the method further comprises, during the inference mode, an incremental improvement mode (i.e. online learning or online improvement) during which the observed trajectories are cut into past and future trajectory parts, pre-processed in translation and rotation and encoded with their respective encoder deep neural network, the past trajectory part encodings being stored as key elements while their associated future trajectory part encodings being stored as value elements in the key-value database.

Such model is able to improve incrementally, after it has been trained, when observing new examples online. This trait is important for industrial automotive applications and is currently lacking in other state of the art predictors. The model incrementally creates a knowledge base that is used as experience to perform meaningful predictions. Since the knowledge base is built from trajectory samples and thanks to the non-parametric nature of the memory module, it can also include instances observed while the system is running, after it has been trained. In this way the system gains experience online increasing its accuracy and capability to generalize at no training cost. Such online improvement does not require neural network training.

According to an advantageous embodiment, the MANN is a persistent MANN for moving objects of interest trajectory prediction.

A MANN that is not episodic (also enabling online improvement or online learning) acts like a persistent memory which stores an experience of relevant data to perform accurate predictions for any observation and not just for a restricted episode or set of samples. The rationale behind this approach is that instead of solving simple algorithmic tasks as a Neural Turing Machine, it learns how to create a pool of samples to be used for future trajectory predictions.

According to an advantageous embodiment, the predicted future trajectories are refined by integrating knowledge of the environment of the monitoring device using semantic maps. The training of the module in charge of this refinement occurs jointly to the fine-tuning of the decoder only for devices using such refinement.

In order to improve predictions, the context can also be taken into account and its physical constraints. According to this, the set of trajectory proposals obtained by the MANN is refined by integrating knowledge of the surrounding environment using semantic maps.

According to an advantageous embodiment, the key-value database is addressable as individual elements.

This model uses a controller network with an external element-wise addressable memory. This is used to store explicit information and access selectively relevant items. This would allow to peak into likely futures to guide predictions.

A second aspect of the invention relates to a computer-implemented method for assisting a human operator to operate a monitoring device or for assisting an autonomous monitoring device, the method comprising the steps of: capturing an environment of the monitoring device into a series of data acquisitions from one or several sensors (e.g. camera, radar, LIDAR) mounted on the monitoring device while the device is in operation; extracting an input trajectory for each moving object of interest in the captured environment; supplying said input trajectories to the computer implemented method according to the inference mode of the first aspect; and displaying to the human operator's attention multiple predicted future trajectories of the moving objects of interest, or providing to the autonomous monitoring device, said multiple predicted future trajectories of the moving objects of interest for further decision taking or action making.

BRIEF DESCRIPTION OF THE DRAWINGS

Other features and advantages of the present invention will appear more clearly from the following detailed description of particular non-limitative examples of the disclosure, illustrated by the appended drawings where:

- Figure 1 represents an overview of a multimodal trajectory prediction showing multiple future predictions given an observed past relying on a Memory Augmented Neural Network according to the present disclosure;

- Figure 2 represents the training mode where past and future trajectories are encoded separately and a decoder reconstructs the future trajectory from the future trajectory encoding conditioned by the past trajectory encoding;

- Figure 3 represents the pre-processing step to separate past and future trajectories according to a preferred mode of the disclosure;

- Figure 4 represents the overall system architecture during the inference mode according to a first method;

- Figure 5 represents the overall system architecture during the inference mode according to a second method using the surrounding context;

- Figure 6 shows an illustration of the time-adaptive distance threshold used inside a time-adaptive miss rate error function in use during the training of the memory controller.

## DETAILED DESCRIPTION OF THE INVENTION

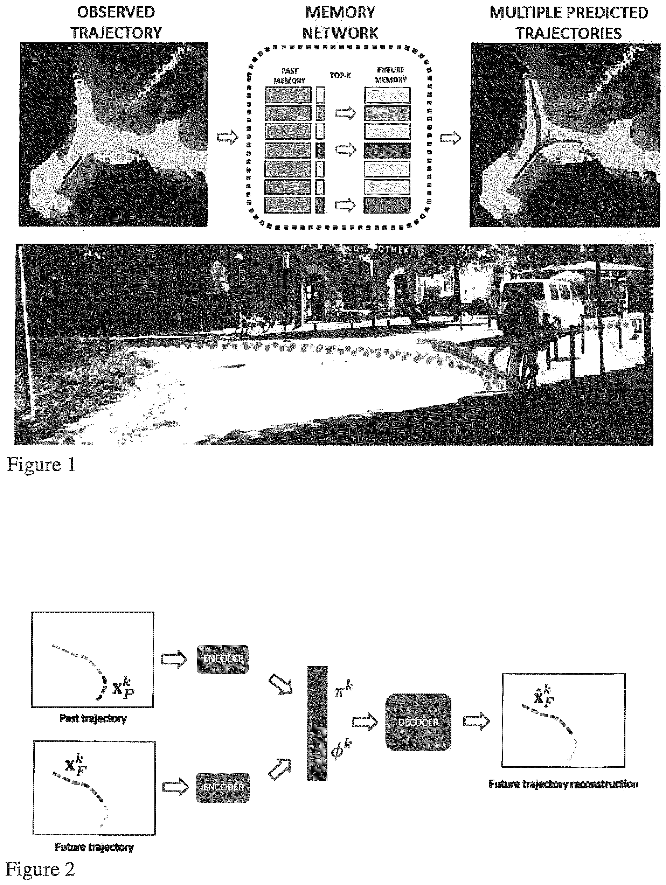

Before describing in more details, the different modes to carry out some preferred modes of the present disclosure, a general overview of a multimodal trajectory prediction showing multiple future predictions given an observed past relying on a Memory Augmented Neural Network will be presented hereafter in relation with Figure 1.

Predicting future trajectories of moving objects is intrinsically multimodal: moving object dynamics give rise to a set of diversely likely outcomes for an external observer. While humans can address this task by implicit learning, i.e. exploiting procedural memory (knowing how to do things) from similar scenarios of previous experience, without explicit and conscious awareness, for machines this task has proven to be extremely hard.

In this disclosure, we are presenting a memory augmented neural trajectory predictor (MANTRA). MANTRA is an approach implementing a persistent Memory Augmented Neural Network (MANN) for moving object trajectory prediction. In the disclosed preferred model, an external associative memory (memory network or key-value database) is trained to write pairs of past and future trajectories and keep in memory only the most meaningful and non-redundant samples. The model incrementally creates a knowledge base that is used as experience to perform meaningful predictions. This mimics the way in which implicit human memory works. Since the knowledge base is built from trajectory samples, it can also include instances observed while the system is running, after it has been trained. In this way the system gains experience online increasing its accuracy and capability to generalize at no training cost.

To memorize samples, past and future trajectories are stored in the memory in an encoded form, separately. In fact, this permits to use the encoding of an observed trajectory as a memory key to read an encoded future and decode them jointly to generate a prediction. Therefore, the actual future trajectory coordinates are obtained decoding a future read from memory, conditioning it with the observed past (blue line on the top left image of Fig. 1). In this way, the output is not a simple copy of previously seen examples, but is instead a newly generated trajectory obtained both from the system experience (i.e. its memory) and the instance observed so far. By reading multiple futures from memory, diverse meaningful predictions can be obtained (bundle of colored lines starting from the blue line on the top right image in Fig. 1). The bottom stripe image shows the overall scenario where the model receives as input the past trajectory of a cyclist and deduce the multiple future trajectories this cyclist may take at the crossroad.

As it will be explained now, the method of this disclosure can operate in three different operating modes, whether it is operating in (1) its training mode, (2) its memorization mode or (3) its inference mode.

### Training mode

Figure 2 represents the training mode where past and future trajectories are encoded separately and a decoder reconstructs future trajectory from the future trajectory encoding conditioned by the past trajectory encoding. The training mode can be decomposed into 3 different training stages.

There is a first stage of 'Feature Representation Learning' during which the encoding-decoding functions, namely the two different encoders and the unique decoder are trained jointly as an autoencoder as illustrated in Figure 2. The encoders learn to map past and future trajectories into two separate meaningful representations and the decoder learns to reproduce the future. Instead of using just the future as input, we condition the reconstruction process also with an encoding of the past. This is useful for two aspects. First, we are able to train two different encoders for past and future. The two encoders are used to obtain separate representations for both keys (past) and values (future) in memory. Second, we obtain reconstructions of the future that is compatible with the past. This is of crucial importance for prediction since at inference time we synthesize trajectory encodings by combining past and future parts taken from different examples. This also allows to generate trajectories that differ from the ones in memory and are not just a simple copy of already observed samples.

Next, there is a second stage of 'Memory Controller Learning' inside which the controller in charge of storing information in the external memory is trained to store only what is useful to predict accurately the future trajectories, limiting memory redundancy. This is made possible thanks to the usage of a particular training loss $\mathcal{L}_c$ , the controller loss, based on a time-adaptive miss rate error function e (with a distance threshold depending on the time step):

$$e = 1 - \frac{1}{N} \sum_{i=1}^{N} \mathbb{1}_i(\hat{\mathbf{x}}_F, \mathbf{x}_F)$$

where

$$\mathbb{1}_i(\hat{x}_F, x_P)=1$$

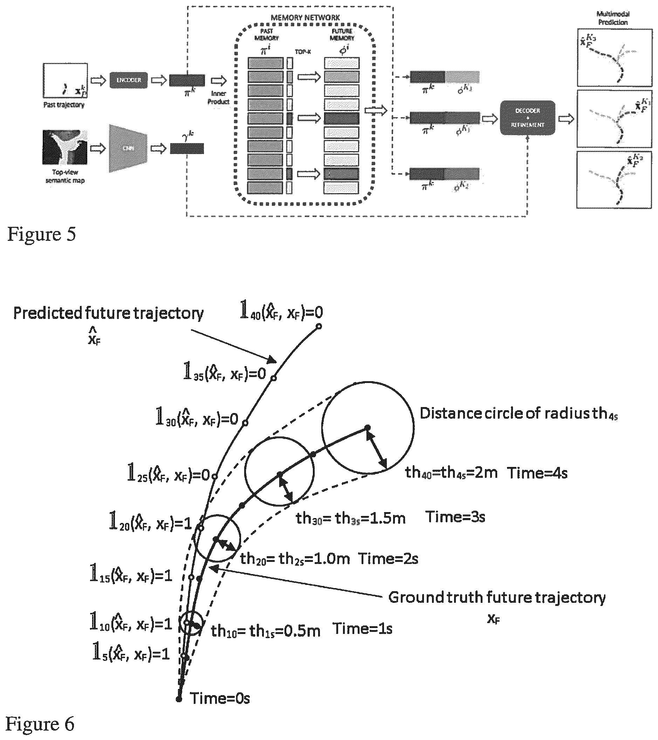

is an indicator function equal to 1 if the i-th point of the prediction $\hat{x}_F$ lays within a threshold th from the ground truth and 0 otherwise. We use a different threshold for each time step, allowing a given uncertainty for the farthest point and linearly decreasing towards 0. This is shown in Figure 6.

The controller loss $\mathcal{L}_c$ is computed from the time-adaptive miss rate error function e as follows:

$$\mathcal{L}_c = e \cdot (1 - P(w)) + (1 - e) \cdot P(w)$$

where $P(w)$ is the write probability associated to a piece of information to be stored in the external memory.

By minimizing the controller loss $\mathcal{L}_c$ at training time, the memory controller is trained to emit a write probability $P(w)$ which is low when the error e is small and high when the error e is large.

If the model exhibits a large prediction error, the controller emits a high write probability $P(w)$, which makes it write the current sample with its ground truth future encoding in memory. When this happens, it indicates that the memory lacks samples to accurately reconstruct the future. Hence, by writing the sample in memory, the model will improve its prediction capabilities.

Finally, there is a third and last training stage during which we fine-tune the decoder in order to adapt it to past-future pairs that do not belong to the same sample. This stage comes after the memory has been filled with past and future trajectory encodings (see memorization mode). In this third stage, we feed the decoder with past trajectory encodings coming from the training set and future trajectory encodings coming from the memory.

In case an iterative refinement module is used, we jointly train this iterative refinement module and fine-tune the decoder during this last training stage. As explained above, we feed the decoder with past trajectory encodings coming from the training set and future trajectory encodings coming from the memory. Meanwhile, the iterative refinement module is trained using an already existing training method as for example the one presented in the DESIRE article.

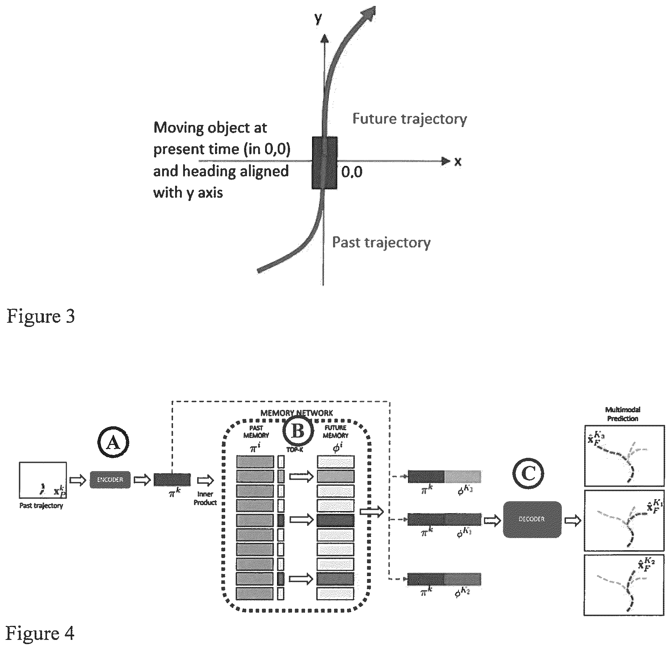

In a preferred mode, we train our model to observe a few seconds trajectories (for example 2 seconds) and predict a few seconds in the future (for example 4 seconds). To achieve translation and rotation invariance, each trajectory is normalized in translation and rotation by shifting the present in the origin (0,0) of a reference frame (X,Y) and rotating the trajectory in order to make it tangent with the Y-axis in the origin. In this way all futures start from (0, 0) in an upward direction. This is shown in Figure 3.

Memorization mode

The external memory is filled with known trajectories of moving objects. Before being stored, the trajectories are normalized in translation and rotation as explained above, then cut into past and future parts, the past parts are transformed by their dedicated encoder into feature representations which are stored as 'key' elements in the memory while their associated future parts are transformed by their dedicated encoder into separate feature representations and stored as 'value' elements in the memory. This is done once (one epoch) for all data present in the training dataset. The invention can operate in this mode while it is operating in inference mode: this is then called incremental online learning or incremental improvement mode and the stored data are not coming from a training dataset but obtained online from the observed trajectories. Stored data are preferably past and future trajectory encodings obtained after pre-processing (with translation and rotation normalization) of the observed data.

Inference mode 1 - without context

Figure 4 represents the MANTRA architecture during the inference mode according to a first method. The encoding (A) of an observed past trajectory is used as key to read likely future encodings from memory (B). A multimodal prediction is obtained by decoding each future encoding conditioned by the observed past (C).

At inference time, when an input trajectory is observed and we want to predict its multiple possible futures, the inference mode is decomposed into 3 different stages, as it is illustrated in the following Figure 4.

First at stage A, the observed input trajectory is considered as a 'past' trajectory and consequently transformed into an encoding by the past encoder.

Second at stage B, the input trajectory encoding is used as a key to retrieve meaningful samples from the external memory: similarity scores between the input trajectory encoding and all the memorized past trajectory encodings are computed and the top-K closest memorized past encodings are selected and used as keys to address their associated K memorized future trajectory encodings.

Third at stage C, each one of these K future trajectory encodings is associated with the input trajectory encoding and transformed into K different new future trajectories by the decoder. These decoded future trajectories are different from the memorized ones because the decoder has taken into account the new input trajectory.

More specifically and according to the developed model of MANTRA architecture as shown in Figure 4, we formulate the task of moving object trajectory prediction as the problem of estimating $P(\hat{x}_F|x_P)$, where $\hat{x}_F$ is the predicted future trajectory and $x_P$ is the observed trajectory (or past). We consider moving object trajectories as a sequence of 2-dimensional spatial coordinates. The past $\hat{x}_F$ is given by its positions observed up to some reference point identified as present. Similarly, the future $\hat{x}_F$ is the sequence of positions in which it will find itself at the next time steps.

For the memory based trajectory prediction, given a sample trajectory $x^i = \left[x_P^i, x_F^i\right]$, let $\pi^i = \prod(x_P^i)$ and $\phi^i = \Phi(x_F^i)$ be two encoding functions that map the 2D coordinates of past and future trajectories into two separate latent representations. Similarly, let $\Psi(\pi^i, \phi^i)$ be a function that decodes a pair of past-future encodings into the coordinates of the future sub-trajectory $x_F^i$, as shown in Fig. 4.

We define $M = \{\pi^i, \phi^i\}$ as an associative key-value memory containing $|M|$ pairs of past-future encodings. When a new trajectory $x_P^k$ is observed, its encoding $\pi^k$ is used as key to retrieve meaningful samples from memory. Note that observed trajectories are all considered to be past trajectories, since the future counterpart is yet to be observed and is what we want to predict. The memory addressing mechanism is implemented as a cosine distance between past encodings, which produces similarity scores $\{s_i\}$ over all memory locations:

$$s_i = \frac{\pi^k \pi^i}{\|\pi^k\|\|\pi^i\|} \quad i = 0, ..., |M| \qquad (1)$$

According to the similarity scores, the future encodings of the top-K elements $\phi^j$ are separately combined with the encoding of the observed past $\pi^k$. The novel pairs of encodings are transformed into 2D coordinates using the decoding function $\Psi: \hat{x}_F^j = \Psi(\pi^k, \phi^j)$, with $j = 1, ..., K$. Note that $\pi^k$ is fixed while $\phi^j$ varies depending on the sample read from memory. Future encodings $\phi^j$ act as an oracle which suggests possible outcomes based on the past observation. This strategy allows the model to look ahead into likely futures in order to predict the correct one. Since multiple $\phi^j$ can be used independently, we can decode multiple futures and obtain a multimodal prediction in case of uncertainty (e.g. a bifurcation in the road).

Inference mode 2 - with context

Figure 5 represents the MANTRA architecture during the inference mode according to a second method using the surrounding context. The encoding of an observed past trajectory is used as key to read likely future encodings from memory. A multimodal prediction is obtained by decoding each future encoding, conditioned by the observed past. The surrounding context is processed by a CNN and fed to the Refinement Module to adjust predictions.

This second inference mode operates similarly to the first inference mode except that it further takes into account the context. Thus, we formulate the task of vehicle trajectory prediction as the problem of estimating $P(\hat{x}_F|x_P, c)$, where $\hat{x}_F$ is the predicted future trajectory, $x_P$ is the observed trajectory (or past) and $c$ is a representation of the context (e.g. roads, sidewalks).

For that purpose, the model integrates an iterative refinement module. It can be performed using an already existing method as for example the one presented in the DESIRE article. To ensure compatibility with the environment, we refine predictions with an iterative procedure. We adopt a feature pooling strategy: first, a CNN extracts a feature map $\gamma^k$ from the context $c$; then, predictions are overlapped with the feature map and, for each time step coordinates, we extract the correspondent feature values (one per channel); finally, the resulting vector is fed to a Gate Recurrent Unit (GRU) and a fully connected layer that output trajectory offsets.

It will be understood that various modifications and/or improvements evident to those skilled in the art can be brought to the different embodiments of the invention described in the present description without departing from the scope of the invention defined by the accompanying claims.

**Claims**

1. A computer-implemented method for predicting multiple future trajectories of moving objects of interest in an environment of a monitoring device comprising a memory augmented neural network, MANN, comprising at least one trained encoder deep neural network, one trained decoder deep neural network and a key-value database storing keys corresponding to past trajectory encodings and associated values corresponding to associated future trajectory encodings, the method comprising an inference/prediction mode of the MANN with the steps of:

   - observing an input trajectory for each moving object of interest in the environment of the monitoring device;
   - encoding the input trajectory;
   - using the input trajectory encoding as a key element for the key-value database;
   - retrieving a plurality K of key elements of stored past trajectory encodings corresponding to the K closest samples of the input trajectory encoding;
   - addressing their K associated value elements corresponding to the K associated future trajectory encodings;
   - decoding each of the addressed K associated future trajectory encodings jointly with the input trajectory encoding into K predicted future trajectories;
   - outputting the K predicted future trajectories of each moving object of interest for further processing by the monitoring device.

2. The computer-implemented method of claim 1, wherein the observed input trajectory is pre-processed before encoding to normalize it in translation and rotation and wherein stored past and future trajectory encodings are preprocessed in the same way to the input trajectory before encoding and storing.

3. The computer-implemented method of claim 1 or 2, wherein the environment of the monitoring device is a driving environment and the monitoring device is an autonomous vehicle, AV, or a vehicle equipped with an advanced driver assistance system, ADAS.

4. The computer-implemented method of any of claim 1 to 3, wherein the MANN comprises two trained encoder deep neural networks, the method comprising a training mode prior to the inference mode with the steps of:

   - cutting a dataset of trajectories into pairs of past and future trajectories;
   - preprocessing the past and future trajectories to normalize them in translation and rotation by shifting the present time set (t) in the origin of a reference system (X,Y) and rotating each trajectory in order to make it tangent with the Y-axis in the origin;
   - training one encoder deep neural network to map preprocessed past trajectories into past trajectory encodings, and training another encoder deep neural network to map preprocessed future trajectories into future trajectory encodings
   - training a decoder deep neural network applied to past and future trajectory encodings to reproduce the future trajectories conditioned by the past trajectory encodings.

5. The computer-implemented method of claim 4, wherein during the training mode, the two encoder deep neural networks and the decoder deep neural network are trained jointly as an autoencoder deep neural network.

6. The computer-implemented method of claim 5, wherein the MANN further comprises a trained memory controller neural network, the method further comprising during the training mode, the step of:

   - training the memory controller neural network to perform writing operations in the key-value database by learning to emit write probabilities depending on the reconstruction errors by means of a training controller loss depending on a time-adaptive miss error rate function.

7. The computer-implemented method of claim 6, further comprising during the training mode, a step of storing, in the key-value database, past trajectory encodings as key elements and future trajectory encodings as value elements.

8. The computer-implemented method of claim 7, the method further comprising during the training mode, a step of fine-tuning the decoder deep neural network with past trajectory encodings belonging to training samples and future trajectory encodings coming from values stored in the key-value database..

9. The computer-implemented method of any of claims 1 to 8, the method comprising a memorization mode performed after the training mode and before the inference mode with the step of:

   - storing in the key-value database, past trajectory encodings as key elements and future trajectory encodings as value elements.

10. The computer-implemented method of any of claims 1 to 9, wherein the method further comprises, during the inference mode, an incremental improvement mode during which the observed trajectories are cut into past and future trajectory parts, pre-processed in translation and rotation and encoded with their respective encoder deep neural network, the past trajectory part encodings being stored as key elements while their associated future trajectory part encodings being stored as value elements in the key-value database.

11. The computer-implemented method of any of claims 1 to 10, wherein the MANN is a persistent MANN for moving objects of interest trajectory prediction.

12. The computer-implemented method of any of claims 1 to 11, wherein during the inference mode and after a step of joint training with the fine-tuning of the decoder at the end of the training mode, the predicted future trajectories are refined by integrating knowledge of the environment of the monitoring device using semantic maps.

13. A computer-implemented method for assisting a human operator to operate a monitoring device or for assisting an autonomous monitoring device, the method comprising the steps of:

   - capturing an environment of the monitoring device into a series of data acquisition from one or several sensors mounted on the monitoring device while the device is in operation;
   - extracting an input trajectory for each moving object of interest in the captured environment;
   - supplying said input trajectories to the computer implemented method according to any of claims 1 to 3 and 10 to 12;
   - displaying to the human operator's attention multiple predicted future trajectories of the moving objects of interest, or
   - providing to the autonomous monitoring device, said multiple predicted future trajectories of the moving objects of interest for further decision taking or action making.


## Patentansprüche

1. Computerimplementiertes Verfahren zum Vorhersagen von mehreren künftigen Trajektorien von sich bewegenden Objekten von Interesse in einer Umgebung einer Überwachungsvorrichtung, die ein speichererweitertes neuronales Netzwerk, MANN, umfasst, das mindestens ein trainiertes tiefes neuronales Netzwerk mit Codierer, ein trainiertes tiefes neuronales Netzwerk mit Decodierer sowie eine Schlüsselwertdatenbank umfasst, in der Schlüssel, die vergangenen Trajektoriencodierungen entsprechen, und verknüpfte Werte, die verknüpften künftigen Trajektoriencodierungen entsprechen, gespeichert sind, wobei das Verfahren einen Folgerungs-/Vorhersagemodus des MANN mit den folgenden Schritten umfasst:

   - Beobachten einer Eingangstrajektorie für jedes sich bewegende Objekt von Interesse in der Umgebung der Überwachungsvorrichtung;
   - Codieren der Eingangstrajektorie;
   - Verwenden der Eingangstrajektoriencodierung als ein Schlüsselelement für die Schlüsselwertdatenbank;
   - Abrufen einer Vielzahl K von Schlüsselelementen von gespeicherten vorherigen Trajektoriencodierungen, die den K nächsten Abtastungen der Eingangstrajektoriencodierung entsprechen;
   - Adressieren von deren K verknüpften Wertelementen, die den K verknüpften künftigen Trajektoriencodierungen entsprechen;
   - gemeinsames Decodieren von jeder der adressierten K verknüpften künftigen Trajektoriencodierungen mit der Eingangstrajektoriencodierung zu K vorhergesagten künftigen Trajektorien;
   - Ausgeben der K vorhergesagten künftigen Trajektorien von jedem sich bewegenden Objekt von Interesse zur weiteren Verarbeitung durch die Überwachungsvorrichtung.

2. Computerimplementiertes Verfahren nach Anspruch 1, wobei die beobachtete Eingangstrajektorie vor dem Codieren vorverarbeitet wird, um sie in Translation und Rotation zu normalisieren, und wobei die gespeicherten vorherigen und künftigen Trajektoriencodierungen vor dem Codieren und Speichern auf dieselbe Weise auf die Eingangstrajektorie vorverarbeitet werden.

3. Computerimplementiertes Verfahren nach Anspruch 1 oder 2, wobei die Umgebung der Überwachungsvorrichtung eine Fahrumgebung und die Überwachungsvorrichtung ein autonomes Fahrzeug, AV, oder ein mit einem erweiterten Fahrerunterstützungssystem, ADAS, ausgerüstetes Fahrzeug ist.

4. Computerimplementiertes Verfahren nach einem der Ansprüche 1 bis 3, wobei das MANN zwei trainierte tiefe neuronale Netzwerke mit Codierer umfasst, wobei das Verfahren vor dem Folgerungsmodus einen Trainingsmodus mit den folgenden Schritten umfasst:

- Teilen eines Datensatzes von Trajektorien in Paare von vorherigen und künftigen Trajektorien;
- Vorverarbeiten der vorherigen und künftigen Trajektorien, um sie durch Verschieben des gegenwärtigen Zeitsatzes (t) im Ursprung eines Referenzsystems (X, Y) und Rotieren jeder Trajektorie, um die Tangentialität mit der Y-Achse im Ursprung herzustellen, in Translation und Rotation zu normalisieren;
- Trainieren von einem tiefen neuronalen Netzwerk mit Codierer, um vorverarbeitete vorherige Trajektorien vorherigen Trajektoriencodierungen zuzuordnen, und Trainieren eines weiteren tiefen neuronalen Netzwerks mit Codierer, um vorverarbeitete künftige Trajektorien künftigen Trajektoriencodierungen zuzuordnen
- Trainieren eines tiefen neuronalen Netzwerks mit Decodierer, das auf vorherige und künftige Trajektoriencodierungen angewendet wird, um die durch die vorherigen Trajektoriencodierungen konditionierten künftigen Trajektorien zu reproduzieren.

5. Computerimplementiertes Verfahren nach Anspruch 4, wobei die zwei tiefen neuronalen Netzwerke mit Codierer und das tiefe neuronale Netzwerk mit Decoder während des Trainingsmodus als ein tiefes neuronales Netzwerk mit Autocodierer trainiert werden.

6. Computerimplementiertes Verfahren nach Anspruch 5, wobei das MANN ferner ein trainiertes neuronales Netzwerk mit Speichersteuerung umfasst, wobei das Verfahren während des Trainingsmodus ferner den folgenden Schritt umfasst:

- Trainieren des neuronalen Netzwerks mit Speichersteuerung zum Durchführen von Schreiboperationen in der Schlüsselwertdatenbank durch Lernen, Schreibwahrscheinlichkeiten in Abhängigkeit von den Rekonstruktionsfehlern mittels eines Trainingssteuerungsverlusts in Abhängigkeit von einer zeitadaptiven Fehlschlagratenfunktion zu emittieren.

7. Computerimplementiertes Verfahren nach Anspruch 6, das ferner während des Trainingsmodus einen Schritt des Speicherns von vorherigen Trajektoriencodierungen als Schlüsselelemente und künftigen Trajektoriencodierungen als Wertelemente in der Schlüsselwertdatenbank umfasst.

8. Computerimplementiertes Verfahren nach Anspruch 7, wobei das Verfahren während des Trainingsmodus ferner einen Schritt des Feinabstimmens des tiefen neuronalen Netzwerks mit Decoder mit vorherigen Trajektoriencodierungen, die zu Trainingsproben gehören, und künftigen Trajektoriencodierungen, die von in der Schlüsselwertdatenbank gespeicherten Werten kommen, umfasst.

9. Computerimplementiertes Verfahren nach einem der Ansprüche 1 bis 8, wobei das Verfahren einen Einprägemodus, der nach dem Trainingsmodus und vor dem Folgerungsmodus durchgeführt wird, mit dem folgenden Schritt umfasst:

- Speichern von vorherigen Trajektoriencodierungen als Schlüsselelemente und künftigen Trajektoriencodierungen als Wertelemente in der Schlüsselwertdatenbank.

10. Computerimplementiertes Verfahren nach einem der Ansprüche 1 bis 9, wobei das Verfahren während des Folgerungsmodus einen inkrementellen Verbesserungsmodus umfasst, während dem die beobachteten Trajektorien in vorherige und künftige Trajektorienteile geteilt, in Translation und Rotation vorverarbeitet und mit ihrem jeweiligen tiefen neuronalen Netzwerk mit Codierer codiert werden, wobei die vorherigen Trajektorienteilcodierungen als Schlüsselelemente gespeichert werden, während deren verknüpfte künftige Trajektorienteilcodierungen als Wertelemente in der Schlüsselwertdatenbank gespeichert werden.

11. Computerimplementiertes Verfahren nach einem der Ansprüche 1 bis 10, wobei das MANN ein persistentes MANN für eine Trajektorienvorhersage für sich bewegende Objekte von Interesse ist.

12. Computerimplementiertes Verfahren nach einem der Ansprüche 1 bis 11, wobei während des von Folgerungsmodus und nach einem Schritt des gemeinsamen Trainings mit dem Feinabstimmen des Decoders am Ende des Trainingsmodus die vorhergesagten künftigen Trajektorien durch Integrieren von Kenntnissen über die Umgebung der Überwachungsvorrichtung unter Verwendung von semantischen Karten verfeinert werden.

13. Computerimplementiertes Verfahren zum Unterstützen eines menschlichen Bedieners beim Bedienen einer Überwachungsvorrichtung oder zum Unterstützen einer autonomen Überwachungsvorrichtung, wobei das Verfahren die folgenden Schritte umfasst:

- Registrieren einer Umgebung der Überwachungsvorrichtung in einer Reihe der Datenerfassung von einem oder mehreren Sensoren, die an der Überwachungsvorrichtung montiert sind, während die Vorrichtung in Betrieb ist;
- Extrahieren einer Eingangstrajektorie für jedes sich bewegende Objekt von Interesse in der registrierten Umgebung;
- Übergeben der Eingangstrajektorien an das computerimplementierte Verfahren gemäß einem der Ansprüche 1 bis 3 und 10 bis 12;
- Anzeigen von mehreren vorhergesagten künftigen Trajektorien der sich bewegenden Objekte von Interesse zur Wahrnehmung durch den menschlichen Bediener oder
- Bereitstellen der mehreren vorhergesagten künftigen Trajektorien der sich bewegenden Objekte von Interesse zur künftigen Entscheidungstreffung oder Aktionsdurchführung für die autonome Überwachungsvorrichtung.

## Revendications

1. Procédé mis en œuvre par ordinateur pour prédire de multiples trajectoires futures d'objets d'intérêt mobiles dans un environnement d'un dispositif de surveillance comprenant un réseau neuronal à mémoire augmentée, MANN, comprenant

au moins un réseau neuronal profond de codeur entraîné, un réseau neuronal profond de décodeur entraîné et une base de données clés-valeurs stockant des clés correspondant à des codages de trajectoires passées et des valeurs associées correspondant à des codages de trajectoires futures associés, le procédé comprenant un mode d'inférence/de prédiction du MANN ayant les étapes :

- d'observation d'une trajectoire d'entrée pour chaque objet d'intérêt mobile dans l'environnement du dispositif de surveillance ;
- de codage de la trajectoire d'entrée ;
- d'utilisation du codage de trajectoire d'entrée comme élément clé pour la base de données clés-valeurs ;
- de récupération d'une pluralité K d'éléments clés de codages de trajectoires passées stockés correspondant aux K échantillons les plus proches du codage de trajectoire d'entrée ;
- d'adressage de leurs K éléments de valeurs associées correspondant aux K codages de trajectoires futures associés ;
- de décodage de chacun des K codages de trajectoires futures associés adressés conjointement avec le codage de trajectoire d'entrée en K trajectoires futures prédites ;
- de sortie des K trajectoires futures prédites de chaque objet d'intérêt mobile pour un traitement ultérieur par le dispositif de surveillance.

2. Procédé mis en œuvre par ordinateur selon la revendication 1, dans lequel la trajectoire d'entrée observée est prétraitée avant le codage pour la normaliser en translation et en rotation, et dans lequel des codages de trajectoires passées et futures stockés sont prétraités de la même manière que la trajectoire d'entrée avant le codage et le stockage.

3. Procédé mis en œuvre par ordinateur selon la revendication 1 ou 2, dans lequel l'environnement du dispositif de surveillance est un environnement de conduite et le dispositif de surveillance est un véhicule autonome, AV, ou un véhicule équipé d'un système avancé d'aide à la conduite, ADAS.

4. Procédé mis en œuvre par ordinateur selon l'une quelconque des revendications 1 à 3, dans lequel le MANN comprend deux réseaux neuronaux profonds de codeur entraînés, le procédé comprenant un mode d'entraînement avant le mode d'inférence ayant les étapes :

- de découpe d'un jeu de données de trajectoires en paires de trajectoires passées et futures ;
- de prétraitement des trajectoires passées et futures pour les normaliser en translation et en rotation en décalant le temps présent fixé (t) dans l'origine d'un système de référence (X, Y) et en faisant tourner chaque trajectoire afin de la rendre tangente à l'axe Y dans l'origine ;
- d'entraînement d'un réseau neuronal profond de codeur pour mapper des trajectoires passées prétraitées en codages de trajectoires passées, et d'entraînement d'un autre réseau neuronal profond de codeur pour mapper des trajectoires futures prétraitées en codages de trajectoires futures,
- d'entraînement d'un réseau neuronal profond de décodeur appliqué à des codages de trajectoires passées et futures pour reproduire les trajectoires futures conditionnées par les codages de trajectoires passées.

5. Procédé mis en œuvre par ordinateur selon la revendication 4, dans lequel, pendant le mode d'entraînement, les deux réseaux neuronaux profonds de codeur et le réseau neuronal profond de décodeur sont entraînés conjointement en tant que réseau neuronal profond d'auto-codeur.

6. Procédé mis en œuvre par ordinateur selon la revendication 5, dans lequel le MANN comprend en outre un réseau neuronal de contrôleur de mémoire entraîné, le procédé comprenant en outre, pendant le mode d'entraînement, l'étape :

- d'entraînement du réseau neuronal de contrôleur de mémoire pour réaliser des opérations d'écriture dans la base de données clés-valeurs en apprenant à émettre des probabilités d'écriture en fonction des erreurs au moyen d'une perte de contrôleur d'entraînement en fonction d'une fonction de taux d'erreurs manquées adaptable dans le temps.

7. Procédé mis en œuvre par ordinateur selon la revendication 6, comprenant en outre, pendant le mode d'entraînement, une étape de stockage, dans la base de données clés-valeurs, de codages de trajectoires passées comme éléments clés, et de codages de trajectoires futures comme éléments de valeurs.

8. Procédé mis en œuvre par ordinateur selon la revendication 7, le procédé comprenant en outre, pendant le mode d'entraînement, une étape d'accord précis du réseau neuronal profond de décodeur avec des codages de trajectoires passées appartenant à des échantillons d'entraînement et des codages de trajectoires futures provenant de valeurs stockées dans la base de données clés-valeurs.

9. Procédé mis en œuvre par ordinateur selon l'une quelconque des revendications 1 à 8, le procédé comprenant un mode de mémorisation réalisé après le mode d'entraînement et avant le mode d'inférence ayant l'étape :

- de stockage, dans la base de données clés-valeurs, de codages de trajectoires passées comme éléments clés et de codages de trajectoires futures comme éléments de valeurs.

10. Procédé mis en œuvre par ordinateur selon l'une quelconque des revendications 1 à 9, dans lequel le procédé comprend en outre, pendant le mode d'inférence, un mode d'amélioration incrémentielle pendant lequel les trajectoires observées sont découpées en parties de trajectoire passées et futures, prétraitées en translation et en rotation et codées avec leur réseau neuronal profond de codeur respectif, les codages de parties de trajectoire passées étant stockés comme éléments clés tandis que leurs codages de parties de trajectoire futures associés sont stockés comme éléments de valeurs dans la base de données clés-valeurs.

11. Procédé mis en œuvre par ordinateur selon l'une quelconque des revendications 1 à 10, dans lequel le MANN est un MANN persistant pour la prédiction de trajectoires d'objets d'intérêt mobiles.

12. Procédé mis en œuvre par ordinateur selon l'une quelconque des revendications 1 à 11, dans lequel, pendant le mode d'inférence et après une étape d'entraînement conjoint avec l'accord précis du décodeur à la fin du mode d'entraînement, les trajectoires futures prédites sont affinées en intégrant des connaissances de l'environnement du dispositif de surveillance à l'aide de cartes sémantiques.

**13.** Procédé mis en œuvre par ordinateur pour aider un opérateur humain à faire fonctionner un dispositif de surveillance ou pour aider un dispositif de surveillance autonome, le procédé comprenant les étapes :

- de capture d'un environnement du dispositif de surveillance en une série d'acquisitions de données à partir d'un ou plusieurs capteurs montés sur le dispositif de surveillance pendant que le dispositif est en fonctionnement ;
- d'extraction d'une trajectoire d'entrée pour chaque objet d'intérêt mobile dans l'environnement capturé ;
- d'apport desdites trajectoires d'entrée au procédé mis en œuvre par ordinateur selon l'une quelconque des revendications 1 à 3 et 10 à 12 ;
- d'affichage, à l'attention de l'opérateur humain, de multiples trajectoires futures prédites des objets d'intérêt mobiles, ou
- de fourniture au dispositif de surveillance autonome, desdites multiples trajectoires futures prédites des objets d'intérêt mobiles pour une prise de décision ou une action ultérieure.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020082248 A

**Non-patent literature cited in the description**

- *Key-Value Memory Networks for Directly Reading Documents, https://arxiv.org/abs/1606.03126*
- *DESIRE: Distant Future Prediction in Dynamic Scenes with Interacting Agents, https://arxiv.ora/abs/1704.04394*
- *Forecasting Future Action Sequences with Neural Memory Networks, https://arxiv.orq/abs/1909.09278*
- *Memory-Augmented Neural Networks for Predictive Process Analytics, https://arxiv.org/abs/1802.00938*
- **YUNING CHAI et al.** MultiPath: Multiple Probabilistic Anchor Trajectory Hypotheses for Behavior Prediction. *ARXIV.ORG,* 12 October 2019
- **FERNANDO THARINDU et al.** Memory Augmented Deep Generative Models for Forecasting the Next Shot Location in Tennis. *IEEE TRANSACTIONS ON KNOWLEDGE AND DATA ENGINEERING,* 13 April 2019, vol. 32 (9), 1785-1797